# EUROPEAN PATENT APPLICATION

(11) **EP 3 660 268 A1**
(43) Date of publication of application: **03.06.2020**
(21) Application number: 19205704.0
(22) Date of filing: 28.10.2019
(51) Int. Cl.: F01D 5/02, F04D 29/66

(54) **WINDAGE SHIELD**

(30) Priority: 27.11.2018 GB 201819251
(71) Applicant: Rolls-Royce plc, London N1 9FX (GB)
(72) Inventor: Breen, Clive, Derby, Derbyshire DE24 8BJ (GB)
(74) Representative: Rolls-Royce plc

(57) **Abstract**

A fan rotor module for a gas turbine engine (10), the fan rotor module comprising a drive arm, a fan disc (100") and a windage shield (115") attached at one or more points to a rear portion of the fan disc (100"), wherein the fan rotor module comprises at least one balancing weight disposed at one or more of the points where the windage shield (115") is attached to the rear portion of the fan disc (100").

## Description

### TECHNICAL FIELD

The present disclosure relates to a windage shield for mounting on a rotor disc of a fan of a gas turbine engine, a fan of a gas turbine engine and a gas turbine engine.

### BACKGROUND

Gas turbine engines include a fan at the front of the engine. The fan comprises a plurality of radially extending blades mounted on a rotor disc which rotates about an axis. The fan is used as a first compression stage for air passed to a combustor, and to direct air passing through a by-pass to provide thrust. Further compression stages for the air provided to the combustor may also use rotating compressors, having a plurality of blades extending from a hub.

Rotation of a fan causes a pressure differential to be generated in a space between an annulus filler and the rotor disc, with higher pressure air located at the position radially furthest from the axis of rotation, and lower pressure air located at the position radially closest to the axis of rotation. Depending on the specific configuration of adjacent hardware in the engine, the air behind the fan may be stationary and so may have a lower pressure than the air under the annulus filler. At a radially outward position, the higher pressure air moves from under the annulus filler, into the low pressure region rearwards of the annulus filler. To replace this air, new air is drawn into the area under the annulus filler, at a radially inward region. This sets up a recirculation which can reduce engine efficiency.

To prevent recirculation, it is known to provide a radially extending shield, known as a windage shield. The windage shield is mounted on and extends from the rotor disc, and is disposed behind the rotor disc and the annulus fillers. The windage shield may also include a lid that helps form a smooth inner radial airflow surface and retain the annulus filler against radial (centrifugal) forces.

### SUMMARY

The present disclosure provides a fan rotor module, a gas turbine engine, an aircraft, and a method of rear-plane balancing of a fan rotor module for a gas turbine engine as set out in the appended claims.

According to a first aspect there is provided a fan rotor module for a gas turbine engine, the fan rotor module having a drive arm, a fan disc and a windage shield attached at one or more points to a rear portion of the fan disc, wherein the fan rotor module comprises at least one balancing weight disposed at one or more of the points where the windage shield is attached to the rear portion of the fan disc.

Having the balancing weight(s) disposed at one or more of the points where the windage shield is attached to the rear portion of the fan disc may be convenient and/or may provide effective balancing of the fan disc during operation of the gas turbine engine.

One or more balancing weights may be disposed at each of the points where the windage shield is attached to the rear portion of the fan disc.

The balancing weight(s) may each comprise one or more discrete bodies. Each discrete body may have a known mass. Accordingly, the balancing weight(s) may be varied by varying the number of discrete bodies.

Harmful out-of-balance vibrational effects can be caused by an uneven distribution of mass about an axis of rotation of the fan disc (i.e. an imbalanced fan). Imbalance of the fan rotor module and/or of the fan disc during operation of the gas turbine engine may be corrected, reduced or minimised by appropriate selection of the balancing weight(s). For a given gas turbine engine, the appropriate selection of the balancing weight(s) may depend on, for example, the size of the fan, the size of the fan disc and/or the radial location (i.e., the distance from the rotational axis of the fan) of the points where the windage shield is attached to the rear portion of the fan disc. Appropriate selection of the balancing weight(s) may also depend on, for example, scatter in fan blade masses (i.e., variation between masses of fan blades attached to the fan disc). Fan blade mass scatter can affect fan blades comprising any material, and can, for example, be prevalent in fan blades comprising composite materials (e.g., carbon-fibre composite materials).

The windage shield may be attached to the rear portion of the fan disc by at least one mechanical fixing means. One or more of the mechanical fixing means may comprise a nut and a bolt. The balancing weight(s) may comprise one or more washers, e.g. cup washers, disposed on the bolt(s).

The drive arm may be a forward facing drive arm, or a rearward facing drive arm.

Applying one or more balancing weights at one or more of the points where the windage shield is attached to the rear portion of the fan disc makes use of existing attachment points to attach the balancing weights to the fan disc. This arrangement may be particularly effective where there is no convenient existing location for attaching balancing weights for rear plane balancing of a fan disc. This arrangement may be effective for fan rotor modules comprising a forward facing drive arm.

Disposing balancing weights at one or more points where the windage shield is attached to the rear portion of the fan disc may also mean that the balancing weights are located further radially outward than in a conventional arrangement of a fan rotor module. A greater radial distance between the balancing weights and the rotational axis of the fan rotor module may also mean less balancing weight is required to provide the same balancing effect as a conventional arrangement (in which there is a lower radial distance between the balancing weights and the rotational axis of the fan rotor module).

A second aspect provides a gas turbine engine comprising a fan rotor module according to the first aspect.

The gas turbine engine may be an aircraft gas turbine engine.

A third aspect provides an aircraft comprising a gas turbine engine according to the second aspect.

A fourth aspect provides a method of rear-plane balancing of a fan rotor module for a gas turbine engine, the fan rotor module having a drive arm, a fan disc and a windage shield attached at one or more points to a rear portion of the fan disc, the method comprising:
applying at least one balancing weight at one or more of the points where the windage shield is attached to the rear portion of the fan disc.

Applying the balancing weight(s) may comprise applying one or more balancing weights at each of the points where the windage shield is attached to the rear portion of the fan disc.

The balancing weight(s) may each comprise one or more discrete bodies. Each discrete body may have a known mass. Accordingly, the balancing weight(s) may be varied by varying the number of discrete bodies.

The windage shield may be attached to the rear portion of the fan disc by at least one mechanical fixing means. One or more of the mechanical fixing means may comprise a nut and a bolt. The balancing weight(s) may comprise one or more washers, e.g. cup washers, disposed on the bolts.

The drive arm may be a forward facing drive arm or a rearward facing drive arm.

Applying one or more balancing weights at one or more of the points where the windage shield is attached to the rear portion of the fan disc makes use of existing attachment points to attach the balancing weights to the fan disc. This arrangement may be particularly effective where there is no convenient existing location for attaching balancing weights for rear plane balancing of a fan disc. This arrangement may be effective for fan rotor modules comprising a forward facing drive arm.

Disposing balancing weights at one or more points where the windage shield is attached to the rear portion of the fan disc may also mean that the balancing weights are located further radially outward than in a conventional arrangement of a fan rotor module. A greater radial distance between the balancing weights and the rotational axis of the fan rotor module may also mean less balancing weight is required to provide the same balancing effect as a conventional arrangement (in which there is a lower radial distance between the balancing weights and the rotational axis of the fan rotor module).

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or in the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of descent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** shows an arrangement of a part of a gas turbine engine comprising a fan rotor module;
**Figure 5** shows an example of a windage shield mounted on a fan disc; and
**Figure 6** shows another example of a windage shield mounted on a fan disc.

### DETAILED DESCRIPTION

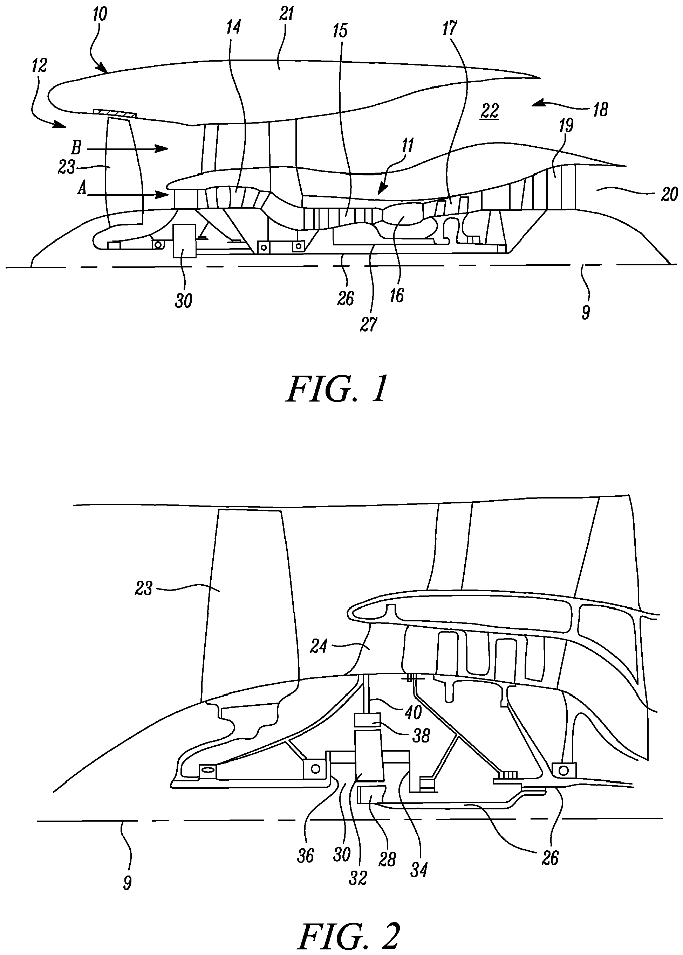

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

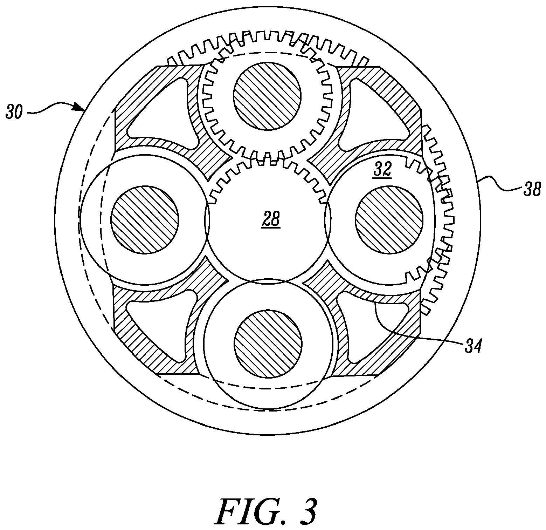

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 18 meaning that the flow through the bypass duct 22 has its own nozzle that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

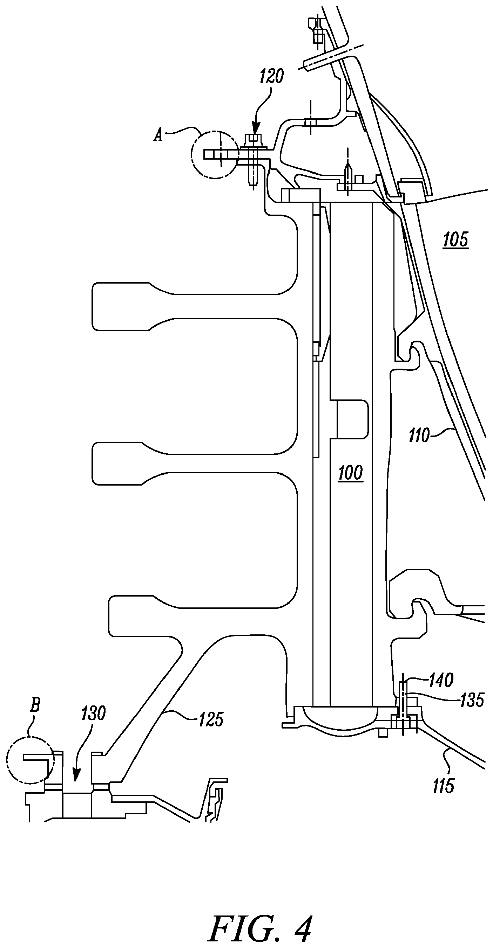

Figure 4 shows a conventional arrangement of a part of a gas turbine engine comprising a fan rotor module. The fan rotor module comprises a fan disc 100, a plurality of fan blades 105, a plurality of annulus fillers 110, a windage shield 115, a support ring 120, and a drive arm 125 connected to the fan disc 100 at a first end and to a curvic joint 130 at a second end. The windage shield 115 is mounted on a rear portion of the fan disc 100, disposed axially rearward of the annulus fillers 110. The windage shield 115 is connected to the fan disc 100 via a nut 135 and a bolt 140. In the arrangement shown, the drive arm 125 is rearward facing. The fan disc 100 is balanced in two planes (i.e., a frontal plane of the fan disc 100 and a rear plane of the fan disc 100). The fan disc 100 is balanced in the frontal plane by a first balancing weight or weights attached to an inner diameter of the support ring 120, outlined by a dashed circle A. The fan disc 100 is balanced in the rear plane by a second balancing weight or weights attached to an inner diameter of the curvic joint 130, outlined by a dashed circle B. Balancing weights (i.e. first and second balancing weights) are applied at both forward and rearward locations (i.e., the frontal plane and the rear plane) of the fan 23 (Figures 1 and 2) of the gas turbine engine 10 (Figures 1 and 2) to evenly distribute the mass of the fan rotor module (including the fan disc 100, fan blades 105, annulus fillers 110, windage shield 115, support ring 120 and other relevant components associated with the fan rotor module) about the axis of rotation 9 (Figures 1 and 2) of the fan disc 100, commonly referred to as "balancing" the fan rotor module. The fan rotor module is balanced to correct, reduce or minimise any harmful out-of-balance vibrational effects which may be caused by an uneven distribution of mass (i.e., an imbalanced fan rotor module) about the axis of rotation 9 of the fan disc 100.

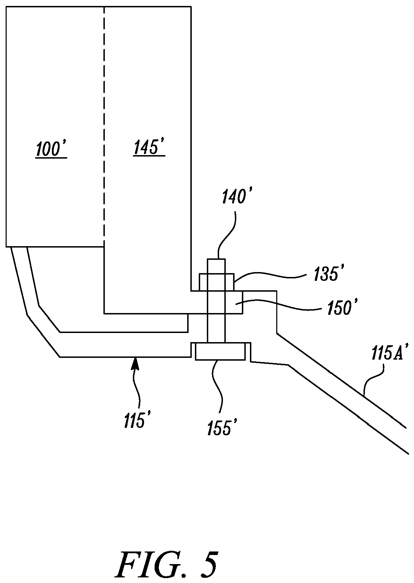

Figure 5 shows a conventional arrangement of a windage shield 115' mounted on a fan disc 100'. The windage shield 115' is mounted on a rear portion of the fan disc 100'. A shield portion 115A' of the windage shield 115' extends axially rearward and radially outward from the fan disc 100'. The fan disc 100' comprises disc posts 145' extending radially outward. Although not shown in Figure 5, a space or gap is positioned between adjacent disc posts 145'. The role of the disc posts 145' is to correctly locate fan blades in the spaces between adjacent pairs of disc posts 145' when fan blades are mounted on the fan disc 100'. An attachment flange 150' extends radially outward from the disc posts 145' at a rear portion of the fan disc 100'. The windage shield 115' is connected to the fan disc 100' at the attachment flange 150' using a nut 135' and a bolt 140'. A head 155' of the bolt 140' is counter sunk into a rear surface of the windage shield 115'.

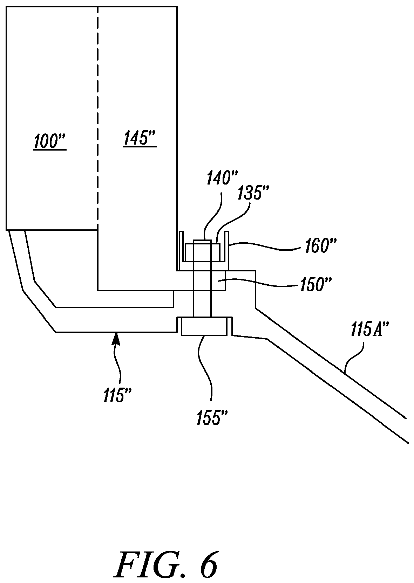

Figure 6 shows a windage shield 115" in accordance with an embodiment of the disclosure mounted on a fan disc 100". The windage shield 115" is mounted on a rear portion of the fan disc 100". A shield portion 115A" of the windage shield 115" extends axially rearward and radially outward from the fan disc 100". The fan disc 100" comprises disc posts 145". An attachment flange 150" extends radially outward from the disc posts 145" at a rear portion of the fan disc 100".

The windage shield 115" is connected to the fan disc 100" at the attachment flange 150" using a nut 135" and a bolt 140". A balancing weight in the form of a cup washer 160" is located on the bolt 140" and is held securely between the attachment flange 150" and the nut 135". A head 155" of the bolt 140" is counter sunk into a rear surface of the windage shield 115".

Attaching a balancing weight at the attachment flange 150" where the windage shield 115" is attached to a rear portion of the fan disc 100" is convenient as doing so makes use of an existing attachment point in a gas turbine engine. It is therefore not necessary to design and manufacture or incorporate a new attachment point in the gas turbine engine simply for the purpose of attaching balancing weights to correct, reduce or minimise imbalance of the fan disc 100". Attaching a balancing weight at one or more points where a windage shield is attached to a rear portion of a fan disc may be effective for gas turbine engines with a forward facing drive arm where there is no convenient location for rear plane balancing of a fan disc.

Attaching a balancing weight at one or more points where a windage shield is attached to a rear portion of a fan disc means that the balancing weight is also further radially outward of the axis of rotation of the fan disc, in comparison to a conventional arrangement (such as that shown in Figure 4) where a rear plane balancing weight is located on an inner diameter of a curvic joint 130. An equivalent balancing effect to that achieved in a conventional arrangement can therefore be achieved using balancing weights of lower mass located at a greater radial distance from the rotational axis of a fan disc (in comparison to a conventional arrangement).

In alternative arrangements, one or more balancing weights may be disposed at any location at which a windage shield is attached to a rear portion of a fan disc. For example, for arrangements in which a windage shield is attached to a rear portion of a fan disc at a plurality of points, one or more balancing weights may be disposed at one or more of the plurality of points.

A windage shield may be attached to a rear portion of a fan disc by at least one mechanical fixing means. In the embodiment of Figure 6, the mechanical fixing means comprises a nut 135" and a bolt 140". In alternative arrangements, the mechanical fixing means may be one or more rivets. The windage shield may be attached to the rear portion of the fan disc by any suitable means.

In the embodiment shown in Figure 6, the balancing weight is a cup washer 160", attached to the fan disc 100" via the nut 135" and the bolt 140" passing through the windage shield 115" and through the attachment flange 150". In alternative arrangements, the balancing weight(s) may comprise one or more different types of washers, e.g. cup washers or disc washers. The balancing weight(s) may alternatively be provided by one or more weighted nuts fastened to the bolt.

More generally, the balancing weight(s) may be provided as one or more discrete bodies having a known mass. The one or more discrete bodies may comprise a shape or form suitable for simple and convenient attachment via a windage shield attachment point. For example, the balancing weight(s) need not comprise an aperture for location on a bolt securing a windage shield to a rear portion of a fan disc, but may instead be held securely by the compressive force between an attachment flange and a nut fastened to the bolt.

The balancing weight(s) comprising one or more discrete bodies may allow the mass of the balancing weight(s) to be varied by varying the number of discrete bodies used. The appropriate selection of the balancing weight(s) may depend on a variety of factors, including for example the size of the fan, the size of the fan disc and the radial location (i.e., the distance from the rotational axis of the fan) of the points where the windage shield is attached to a rear portion of the fan disc. By utilising one or more discrete bodies, the balancing weight(s) may be more easily varied to provide the required balancing weight to correct imbalance of a fan disc for a specific fan rotor module of a gas turbine engine. The number of discrete bodies may be varied before or after a windage shield is attached to a rear portion of the fan disc.

A method of rear plane balancing of a fan rotor module for a gas turbine engine, the fan rotor module comprising a drive arm, a fan disc and a windage shield attached at one or more points to a rear portion of the fan disc, may comprise applying at least one balancing weight at one or more points where the windage shield is attached to the rear portion of the fan disc.

By attaching balancing weights where the windage shield is attached to the rear portion of the fan disc, existing attachment locations can be made use of. The design and/or manufacture of the fan rotor module need not be altered to include an additional attachment point solely for the purpose of attaching a balancing weight for rear plane balancing of the fan disc. Furthermore, the balancing weights attached at one or more of the points where the windage shield is attached to the rear portion of the fan disc may mean the balancing weights are located further radially outward than the balancing weights of a conventional arrangement (for example, where the balancing weights are located on an inner diameter of a curvic joint attached to a drive arm connecting the curvic joint to the fan disc). The greater radial distance between the balancing weights and the rotational axis of the fan rotor module means that balancing weights of a lower mass may be used to provide the same balancing effect as a conventional arrangement.

The method may further comprise applying one or more balancing weights at each of the points where the windage shield is attached to the rear portion of the fan disc. The balancing weight(s) may comprise one or more discrete bodies. The balancing weights may therefore be varied by varying the number of discrete bodies in each balancing weight. The balancing weight required may depend on the specific arrangement of the fan rotor module. Being able to vary the balancing weight by utilising a variable number of discrete bodies may therefore enable rapid and/or simple adjustment of the balancing weight required for the specific circumstances.

The windage shield may be attached to the rear portion by at least one mechanical fixing means. One or more of the mechanical fixing means may comprise a nut and a bolt. The balancing weight(s) may comprise one or more washers disposed on the bolt(s). The washers may be cup washers, or may be disc washers.

The drive arm of the fan rotor module may be a forward facing drive arm, or may be a rearward facing drive arm.

The method described above may be effective for fan rotor modules comprising a forward facing drive arm, in which there is no convenient existing location for rear plane balancing of the fan rotor module.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A fan rotor module for a gas turbine engine, the fan rotor module comprising a drive arm, a fan disc (100") and a windage shield (115") attached at one or more points to a rear portion of the fan disc (100"), wherein the fan rotor module comprises at least one balancing weight disposed at one or more of the points where the windage shield (115") is attached to the rear portion of the fan disc (100").

2. The fan rotor module of claim 1, wherein one or more balancing weights are disposed at each of the points where the windage shield (115") is attached to the rear portion of the fan disc (100").

3. The fan rotor module of claim 1 or claim 2, wherein the balancing weights each comprise one or more discrete bodies.

4. The fan rotor module of any preceding claim, wherein the windage shield (115") is attached to the rear portion of the fan disc (100") by at least one mechanical fixing means.

5. The fan rotor module of claim 4, wherein one or more of the mechanical fixing means comprises a nut (135") and a bolt (140").

6. The fan rotor module of claim 5, wherein one or more balancing weights each comprise one or more washers (160") disposed on the bolt(s) (140").

7. The fan rotor module of any preceding claim, wherein the drive arm is a forward facing drive arm or a rearward facing drive arm.

8. A gas turbine engine comprising the fan rotor module of any one of claims 1 to 7.

9. An aircraft comprising the gas turbine engine of claim 8.

10. A method of rear-plane balancing of a fan rotor module for a gas turbine engine, the fan rotor module having a drive arm, a fan disc (100") and a windage shield (115") attached at one or more points to a rear portion of the fan disc (100"), the method comprising:
applying at least one balancing weight at one or more of the points where the windage shield (115") is attached to the rear portion of the fan disc (100").

11. The method of claim 10, further comprising applying one or more balancing weights at each of the points where the windage shield (115") is attached to the rear portion of the fan disc (100").

12. The method of claim 10 or claim 11, wherein the balancing weights each comprise one or more discrete bodies.

13. The method of claim 12, wherein the balancing weights are varied by varying the number of discrete bodies.

14. The method of any one of claims 10 to 13, wherein the windage shield (115") is attached to the rear portion of the fan disc (100") by at least one mechanical fixing means.

15. The method of claim 14, wherein one or more of the mechanical fixing means comprises a nut (135") and a bolt (140"), and wherein one or more balancing weights each comprise one or more washers (160") disposed on the bolt(s) (140").
